# EUROPEAN PATENT SPECIFICATION

(11) **EP 4 251 560 B1**
(45) Date of publication and mention of the grant of the patent: **06.11.2024**
(21) Application number: 21814801.3
(22) Date of filing: 24.11.2021
(51) Int. Cl.: C01B 3/16, B01J 23/00, B01J 23/06, B01J 23/80, C01B 3/48

(54) **METHOD OF STARTING-UP A WATER GAS SHIFT REACTOR**
VERFAHREN ZUM STARTEN EINES WASSER-GAS-SHIFTREAKTORS
PROCÉDÉ POUR DÉMARRER UN RÉACTEUR DE CONVERSION DU GAZ À L'EAU

(30) Priority: 24.11.2020 EP 20209525
(43) Date of publication of application: 04.10.2023
(73) Proprietor: Topsoe A/S, 2800 Kgs. Lyngby (DK)
(72) Inventor: SEHESTED, Jens, 2750 Ballerup (DK); MONTESANO LOPEZ, Raul, 2800 Kgs. Lyngby (DK); JØRGENSEN, Susanne Lægsgaard, 2840 Holte (DK); BURN, Jeremy Neil, 4340 Tølløse (DK); SCHJØDT, Niels Christian, 4330 Hvalsø (DK)
(74) Representative: Topsoe A/S
(86) International application number: PCT/EP2021/082791
(87) International publication number: WO 2022/112309

(56) References cited:
- EP-A1- 1 256 545
- EP-B1- 2 237 882
- US-A1- 2011 101 279
- US-A1- 2019 047 852
- US-B2- 7 347 978

## Description

### FIELD OF THE INVENTION

The present invention relates to a method of operating a water gas shift reactor, in particular a high-temperature shift (HTS) reactor, in a transient state such as during reactor start-up. The invention relates also to the use of a known catalyst for the starting-up of a water gas shift reactor.

### BACKGROUND OF THE INVENTION

Water gas shift is a well-known method for increasing the hydrogen content of a synthesis gas, this being a gas produced by e.g. steam reforming of a hydrocarbon feed, and which gas contains hydrogen and carbon monoxide. Water gas shift enables increasing the hydrogen yield and decreasing the carbon monoxide content of the synthesis gas according to the equilibrium reaction: CO + H₂O = CO₂ + H₂.

Normally, the hydrogen yield is optimized by conducting the exothermic water gas shift in separate reactors, such as separate adiabatic reactors with inter-stage cooling. Often, the first reactor is a high temperature shift (HTS) reactor having arranged therein a HTS catalyst, and the second reactor is a low temperature shift (LTS) reactor having arranged therein a LTS catalyst. A medium temperature shift (MTS) reactor may also be included or it may be used alone or in combination with a HTS reactor or with a LTS reactor. Typically, HTS reactors are operated in the range 300-550°C and LTS in the range 180-240°C. The MTS reactor operates normally in the temperature range of 210-330°C.

Within industrial practice, high-temperature shift (HTS) reactors are often started up in a flow of superheated steam which heats up the reactor and the HTS catalyst inside it, which typically is an iron-chromium based catalyst. While the reactor temperature is below the dew point of water, condensation will take place inside the reactor. The use of steam to heat the HTS reactor is particularly often used in ammonia plants of older design. Because of this, normally HTS catalysts containing water soluble compounds have not been used in these plants because of the concern for the leaching of such compounds with subsequent loss of catalytic activity.

Any water gas shift (WGS) reactor, such as a HTS reactor, is always heated before exposing the catalyst to the feed gas, yet steam condensation is not desirable. For instance, from M. V. Twigg "Catalyst Handbook", 2nd ed., Manson Publishing Ltd., 1996 (ISBN 1 874545 35 9) section 6.5.3 page 299, the following is quoted: "Reduction of HT shift catalyst is most conveniently done during the reformer start-up, as discussed in Chapter 3. Whenever possible the initial temperature of the HT shift catalyst bed should be high enough to avoid condensation of steam, since liquid water could wash out any chromate and other soluble impurities that may be present.".

Thus, in ammonia plants and hydrogen producing plants, in order to avoid leaching, it is known that the HTS reactor is brought from ambient temperature up to process (operating or reaction) temperature without notable condensation by heating with a gas having a limited content of steam such as dry nitrogen and which is provided by a dedicated separate nitrogen-loop. The nitrogen is inert to the HTS catalyst. However, it would be desirable during starting-up operation for example due the design of the plant, to avoid the use of such dedicated separate nitrogen-loop and instead being able to heat up to process temperature, i.e. operating temperature of the HTS reactor, by heating the cold reactor and catalyst bed arranged therein by applying steam e.g. superheated steam. Since water is a reactant in the water gas shift reaction, steam is always available in such plants.

High temperature shift catalysts are of two main types. The market predominant established type is iron/chromium (Fe/Cr) based with minor amounts of other components typically including copper. Another type of high temperature shift catalysts is based on a zinc oxide/zinc aluminum spinel structure promoted with one or more alkali metals such as potassium. This type of HTS catalyst usually also contains copper as another promoter. This type of HTS catalyst is described in e.g. applicant's patents US 7998897 B2, US 8404156 B2 and US 8119099 B2. The alkali promoters can be present as water soluble compounds such as salts or hydroxides, e.g. K₂CO₃, KHCO₃ or KOH, in the entire temperature interval of interest for HTS-start-up and normal operation, i.e. from -100°C to 600°C.

Hence, it is generally accepted that when starting up a HTS reactor by using steam, the catalyst is an Fe/Cr based catalyst or a similar catalyst free of water-soluble compounds, such as alkali metals or alkali metal compounds. It has hitherto been considered that only the Fe/Cr based catalysts can tolerate the conditions of condensing steam. Again, the concern has been that the alkali metal or alkali metal compounds used as promoters in the Zn/AI-based catalysts would be leached from the catalyst, thereby losing much of its activity for the HTS reaction.

There is also in fact a consensus in the industry that starting up shift catalysts having water soluble compounds under condensing conditions, particularly in low temperature shift (LTS) reactors and HTS reactors, will lead to the leaching of those compounds and accordingly a degradation of catalytic activity. Thus, EP 3368470 for instance, addresses the problem of soluble species being washed out or redistributed within the catalyst bed during upset conditions that lead to condensation in a LTS reactor. Further, this citation discourages having soluble components being re-deposited in the copper containing catalysts used. Moreover, the use of alkali metal or alkali metal compounds in the LTS catalyst during normal operation of LTS reactors, reduce undesired methanol by-product formation, which is due to the presence of copper in the catalyst and the relatively low operating temperatures of the LTS reactor.

US 2019047852A1 discloses a HTS process in which a low steam high temperature shift catalyst is used. The catalyst can be an iron-free water gas shift catalyst incl. those comprising a zinc-aluminate spinel. The HTS process is in connection with the revamping of an ammonia plant and given the presence of leachable compounds in the catalyst, it is implicit that any start-up of the HTS reactor is conducted by heating with a gas having a limited content of steam such as dry nitrogen and which is provided by a dedicated separate nitrogen-loop.

Applicant's US 2011/0101279 A1 discloses a process for enriching a synthesis gas in hydrogen by conversion of carbon monoxide and steam over a catalyst containing oxides of zinc and aluminum together with one or more promoters, the one or more promoters being in form of an alkali metal selected from Na; K, Rb, Cs and mixtures thereof. It is implicit, that due to the presence of alkali metals, which are leachable, a start-up of the HTS reactor is conducted by heating with a gas having a limited content of steam such as dry nitrogen and which is provided e.g. by a dedicated separate nitrogen-loop.

EP2237882 B1 discloses an iron-based water gas shift catalyst consisting of 1.5-10 wt% CuO, 1.5-10 wt% ZnO, 1.0-8 wt% Al₂O₃, 0.1-2.0 wt% K₂O, and with a pore volume of 150-450 ml/kg. The catalyst contains at least 55% Fe₂O₃ ("with Fe₂O₃ to balance") and furthermore, apart from the low content of K, the catalyst is characterized by an absence of zinc-aluminum spinel.

The above citations US 2019047852, US 2011/0101279 A1 and EP2237882 B1 are at least silent about the way in which the WGS reactor is started-up. It is implicit that where leachable compounds in the WGS catalyst are present, steam condensing conditions are avoided during start-up.

### SUMMARY OF THE INVENTION

It is therefore an object of the present invention to provide an industrial start-up of a water gas shift reactor under steam condensing conditions with a catalyst containing an alkali metal or alkali metal compound.

It is another object of the present invention to enable the operation of a water gas shift reactor, in particular a HTS reactor, with an alkali-containing Zn/AI catalyst instead of using the old Fe/Cr-based HTS catalysts.

It is another object of the present invention to provide a simple method for the starting-up of water gas shift reactors, particularly HTS reactors using a catalyst having leachable compounds
These and other objects are solved by the present invention.

Accordingly, in a first aspect, as recited in appended claim 1, the invention is a method of operating a water gas shift reactor in a transient state, in which said transient state is during reactor start-up, the method comprising:
- providing a water gas shift catalyst comprising an alkali metal or alkali metal compound, said water gas shift catalyst being free of chromium (Cr) and iron (Fe);
- heating the water gas shift catalyst up to the reaction temperature of the water gas shift reaction under steam condensing conditions by applying steam, e.g. superheated steam, as a heat transfer medium for the water gas shift catalyst, and where the water gas shift catalyst has a pore volume, as determined by mercury intrusion, larger than the volume of liquid water that forms during the heating; and wherein the pore volume of the water gas shift catalyst is in the range 100-800 ml/kg, as measured by mercury intrusion.

A WGS reactor, such as a HTS reactor, is according to established practice, always heated before exposing the catalyst to a feed gas, yet contrary to the prior art where the initial temperature of e.g. the HTS catalyst bed should be high enough to avoid condensation of steam, since liquid water could wash out any chromate and other soluble impurities that may be present and thus prone to leaching, the present invention seeks on purpose to promote a controlled condensation of steam, despite operating with a WGS catalyst comprising leachable species such as alkali metals or alkali metal compounds.

As used herein, the term "said water gas shift catalyst being free of chromium (Cr) and iron (Fe)" means that the content of Fe is less than 0.05 wt% or the content of Cr is less than 0.02 wt%. For example, the content of Fe and Cr is not detectable.

As used herein, the term "reaction temperature" of the water gas shift reaction is used interchangeably with the term "operating temperature" and "process temperature". For instance, for high temperature shift, the reaction temperature is within the range 300-550°C.

As used herein, the term "under steam condensing conditions" means heating at temperatures where liquid water is formed, i.e. up to the dew point of water; for instance, about 12 atm abs with a dew point (Tₛₐₜ) of about 190°C. The term "under steam condensing conditions" may also be understood as cooling a steam containing gas to a temperature below its dew point at the given steam pressure.

As long as the amount of liquid water that forms during heating, i.e. condensed water, is below the pore volume of the catalyst, no transport of the alkali metal or alkali metal compounds between the catalyst particles, e.g. catalyst pellets or catalyst tablets, is taking place. The porosity (pore volume/total particle volume) of the particles determines how much water can be accommodated in the particle without external transport of the alkali metal or alkali metal compound. Even in the case where the amount of water exceeds the pore volume, the loss of the alkali metal or alkali metal compound from the catalyst particles is controlled by diffusion inside the particles and the difference in concentration of the internal solution in the particles and the external concentration. Diffusion in solution is a rather slow process (diffusion coefficient in the order of 10⁻⁶ cm²/s) making the catalyst durable in many start-ups even if the liquid water is formed in some part of the reactor. An alkali metal or alkali metal compound content above the minimum required for optimal activity is also increasing the industrial longevity of the catalyst, as it will become apparent in a specific embodiment farther below.

According to the first aspect of the invention, as recited in connection with appended claim 1, the pore volume is in the range 100-800 ml/kg, such as 400-800, or 200-600 ml/kg or 240-380 ml/kg or 250-380 ml/kg or 300-600 ml/kg, as recited in appended claim 2; or 300-500 ml/kg, for instance 200, 230, 250, 300, 350, 400, 450 or 500 ml/kg, as measured by mercury intrusion.

The mercury intrusion is conducted according to ASTM D4284.

By using a water gas shift catalyst with the above pore volumes, the amount of condensing water used to heat the catalyst to the dew point, will be less than the total catalyst pore volume. The condensed water, possibly containing dissolved alkali metal or alkali metal compounds, will thus be retained within the catalyst pores. When the temperature upon continued heating rises above the dew point, the water contained in the catalyst pores will evaporate, leaving alkali metal compounds on the catalyst surface. Thereby, the main part of the catalyst will not lose activity to any significant degree, for instance by virtue of the alkali or alkali metal compound no longer being present and thus acting as a promotor, or by virtue of the alkali or alkali metal compound no longer being present and thus no longer being capable of reducing any poisoning by the presence of halogens, or by virtue of the alkali or alkali metal compound no longer being present to reduce the methanol by-product formation in e.g. low temperature shift reactors.

The higher range of pore volume enables reducing the influence of heating towards the reactor wall. Close to the reactor wall, the necessity of also heating up the mass of the reactor vessel results in a larger amount of condensate compared to the main part of the reactor, e.g. the bulk of the catalyst bed, where only the catalyst mass is heated. Hence, close to the reactor wall, the larger pore volume enables taking up the additional water being condensed at the wall.

In an embodiment according to the first aspect of the invention, the pore volume, in particular the higher pore volumes, is achieved by providing a water gas shift catalyst particle having a density of 1.2-2.5 g/cm³, such as 1.3-2.0 g/cm³, for instance 1.3-1.8 g/cm³. The lower the particle density the higher the pore volume. The term "particle" means a pellet, extrudate, or tablet which e.g. have been compactified from a starting catalyst material, for instance from a powder into said tablet. Other ranges of particle density (or simply "density") are 1.2-1.9 g/cm³, such as 1.25-1.75 g/cm³, or 1.55-1.85 g/cm³, or 1.3-1.8 g/cm³, for instance 1.4, 1.5, 1.6, 1.7 g/cm³. The density is measured by simply dividing the weight of e.g. the tablet by its geometrical volume.

Normally, the density of the catalyst particles, for instance a HTS catalyst such as in applicant's US 7998897 or US 8404156 is close to 2 g/cm³, for instance up to 2.5 g/cm³ or about 1.8 or 1.9 g/cm³. These relatively high densities contribute significantly to the mechanical strength of the particles, e.g. tablets, so that these can withstand the impact when for instance loading the HTS reactor from a significant height, for instance 5 m. Thus, having a high particle density, for instance 1.8 g/cm³ or higher, is normally desired. By the present invention, it has also been found that by compactifying e.g. tab-leting to a less dense shape, the pore volume of the particles is increased thereby solving the leaching problems addressed above, yet at the same time the particles maintain a mechanical strength which is adequate for resisting impact upon loading or during normal operation, as well as avoiding increased pressure drop over the reactor during normal operation (continuous operation) due to particles being crushed.

In an embodiment, the catalyst is in the form of pellets, extrudates or tablets, and the mechanical strength is in the range ACS: 30-750 kp/cm², such as 130-700 kp/cm² or 30-350 kp/cm². ACS is an abbreviation for Axial Crush Strength. Alternatively, the mechanical strength measured as SCS is in the range 4-100 such as 20-90 kp/cm or 40 kp/cm. SCS is an abbreviation for Side Crush Strength, also known as Radial Crush Strength. For a given tablet density, the mechanical strength can vary considerably depending on the machinery used for compactifying the catalyst powder. The lower ranges of mechanical strength (ACS or SCS), for instance up to ACS: 300 or 350 kp/cm² or up to SCS: 40 kp/cm, correspond to those obtained with a small (around 100 g/h) hand-fed tablet machine, a so-called Manesty machine. The upper ranges of mechanical strength, for instance up to ACS: 750 kp/cm² or up to SCS: 90 kp/cm, correspond to those obtained using an automated full-scale device (100 kg/h) such as a Kilian RX machine with rotary press. It would thus be understood, that the tablets obtainable with the Manesty machine have a lower mechanical strength than those obtainable with the Kilian RX machine with rotary press. ACS and SCS are measured in the oxidized form of the catalyst. Further, the mechanical strength is measured according to, i.e. in compliance with, ASTM D4179-11.

The invention enables now a simpler and elegant method of starting up the reactor by using steam, e.g. superheated steam, for the heating. Such steam is already available as an integrated part of the process plant, such as a hydrogen or ammonia producing plant. The conventional use of dry nitrogen gas for providing the heating requires, as mentioned above, a dedicated separate loop which i.a. increases complexity and capital expenses.

Accordingly, in an embodiment according to the first aspect of the invention, the water gas shift catalyst is heated up to the the reaction temperature of the water gas shift reaction by means of steam only, such as by providing a superheated steam. Hence, the water gas shift catalyst is not partly heated by using steam, e.g. superheated steam, which is necessary for the water gas shift reaction, but it is entirely heated by using steam available.

In some instances, the heating comprises electric heating in combination with the use of superheated steam. This takes advantage of the use of a low-duty electric heater normally used in the plant during the winter to avoid frost, for instance by applying the electrical heating up to e.g. 80°C and superheated steam from 80°C to the reaction temperature.

In an embodiment according to the first aspect of the invention, the alkali metal is selected from K, Na, Rb, Cs, Li and mixtures thereof. Preferably, the alkali metal is K. Potassium (K) inhibits the formation of undesired methanol as a potential by-product, due to the use in the water gas shift catalysts of elements such as copper which are known to catalyze methanol production at the low operating temperatures of low temperature shift reactors, such temperatures typically being in the range 180-240°C. Further, an alkali metal or alkali metal compound serves to improve the catalyst resistance to halogen poisoning, such as the poisoning by chlorides present in the feed gas, for instance in a synthesis gas or in a first shifted synthesis gas from a HTS reactor, which is then subsequently shifted in a MTS or LTS reactor. Potassium enables also increasing the activity of a catalyst of the Zn/AI-type for use in a high temperature shift reactor, normally operating at temperatures in the range of for instance 300-550°C.

As used herein, the term "alkali metal or alkali metal compounds" means respectively an alkali in its elemental i.e. metallic form, such as K, or a compound thereof, such as K₂CO₃, KHCO₃, KOH, KCH₃CO₂ or KNO₃. It would be understood that the water gas shift catalyst in its oxidized state will not contain an alkali metal in its metallic form. Thus, a term such as "the catalyst is promoted by alkali metals" or "alkali promoted catalyst" or similar, means that the catalyst is promoted with an alkali metal compound, which covers all possible compounds of said alkali metal, which can be used as promoter.

Also, for the purposes of the present application, when the term "alkali" is used, it means alkali metal or alkali metal compound.

In an embodiment according to the first aspect of the invention, as recited in appended claim 3, the water gas shift reactor is a low temperature shift (LTS) reactor, medium temperature shift (MTS) reactor, or a high temperature shift (HTS) reactor.

In an embodiment, the water gas shif reactor is a HTS reactor, suitably a HTS reactor of an ammonia plant or a hydrogen plant. HTS reactors in ammonia plants and hydrogen plants may thus advantageously be started up using steam already available in the plant, as explained before.

The invention enables therefore to start-up water gas shift reactors, in particular HTS reactors, that apart from the conventional use of dry nitrogen gas for providing the heating, have no other method of heating up than blasting them with steam that condenses.

The water gas shift reactor, may also serve as a reverse water gas shift reactor, whereby a feed gas rich in hydrogen and carbon dioxide is converted to carbon monoxide and water according to the reverse water gas shift reaction: CO₂ + H₂ = CO + H₂O.

In an embodiment according to the first aspect of the invention, the water gas shift catalyst is a Zn/AI-based catalyst, in particular a HTS shift catalyst. Accordingly, as recited in appended claim 4, the water gas shift catalyst comprises Zn, Al, optionally Cu, and an alkali metal or alkali metal compound, wherein the water gas shift catalyst is a Zn/AI-based catalyst comprising in its active form a mixture of zinc aluminum spinel and optionally zinc oxide in combination with an alkali metal selected from K, Rb, Cs, Na, Li and mixtures thereof, in which the Zn/AI molar ratio is in the range 0.3-1.5 and the content of alkali metal is in the range 0.3-10 wt% based on the weight of oxidized catalyst.

It would therefore be understood, that the above general embodiment includes Zn, Al; or apart from Zn and Al, also Cu and other elements may be included. In both instances, the rest of the limitations of the embodiment are included, such as having an alkali metal or alkali metal compound, etc.

In a particular embodiment, as recited in appended claim 5, the invention is a water gas shift catalyst which comprises only, i.e. consists of, Zn, Al, optionally Cu, and an alkali metal or alkali metal compound, wherein, as recited above in connection with appended claim 4, the water gas shift catalyst is a Zn/AI-based catalyst comprising in its active form a mixture of zinc aluminum spinel and optionally zinc oxide in combination with an alkali metal selected from K, Rb, Cs, Na, Li and mixtures thereof, in which the Zn/AI molar ratio is in the range 0.3-1.5 and the content of alkali metal is in the range 0.3-10 wt% based on the weight of oxidized catalyst.

It would therefore be understood, that this particular embodiment includes Zn, Al; or this particular embodiment includes apart from Zn and Al, also Cu. In both instances, the rest of the limitations of the embodiment are included, such as having an alkali metal or alkali metal compound, etc.

In a particular embodiment, as recited in appended claim 6, the Zn/AI molar ratio is in the range 0.5-1.0, for instance 0.6 or 0.7, and the content of alkali metal is in the range 0.4-8.0 wt% based on the weight of oxidized catalyst, such as a catalyst of applicant's patent US 7998897 or US 8404156.

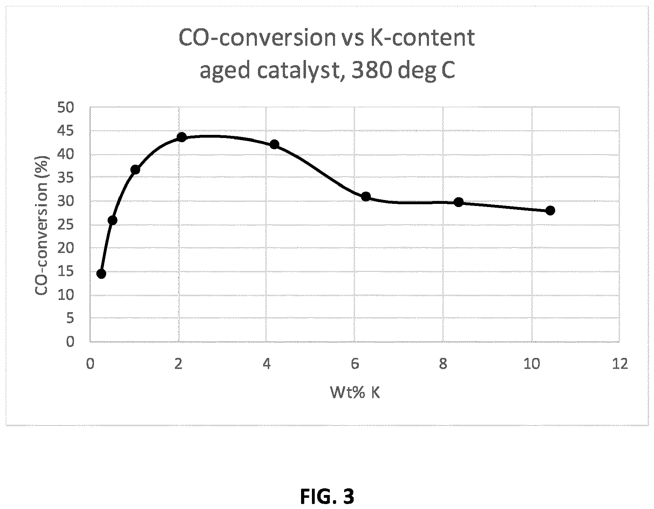

In another particular embodiment, as recited in appended claim 7, the content of the alkali metal, preferably K, is in the range 1-6 wt%, such as 1-5 wt% or 2.5-5 wt%. It has been found that in this particular range, the catalytic activity is fairly constant independent of the amount of alkali metal being present. By applying this particular range, the catalyst acts like an "alkali-buffer" and thereby the catalytic activity is not impaired significantly if a slight loss of the alkali metal promoter should occur in a part of the reactor, thereby also further increasing the number of start-ups without the catalyst losing activity. Further, by operating with a catalyst having the upper range of the alkali metal, for instance 6 wt% K, leaching of K will in fact bring the activity to a higher level, as it will also become apparent from Example 2 farther below and corresponding Fig. 3. This alkali-buffer effect, or simply buffer effect, takes place since leaching of say 10% (relative) of the potassium, would decrease the K content from, say 4 wt% K, to 3.6 wt% K, which will not decrease the catalyst activity. In fact, if the initial K content is for instance 6 wt% K or lower, suitably 5 wt% K, the activity would - on a 10% (relative) leaching - increase, since a catalyst with 4.5 wt% K has higher activity than a catalyst with 5 wt% K.

The buffer effect is for instance highly beneficial near the reactor wall, where more steam is necessary to heat up due to the high heat capacity of the reactor wall, so that there is a higher risk of alkali leaching. Yet, any alkali leaching after a number of start ups is still not significantly impairing catalytic activity, or even the catalytic activity may increase..

In an embodiment according to the first aspect of the invention, as recited in appended claim 8, Cu is in the range 0.1-10 wt%, such as 1-5 wt%, based on the weight of oxidized catalyst. Cu serves as an optional promoter which can be incorporated into the catalyst by conventional impregnation or co-precipitation methods.

In an embodiment according to the first aspect of the invention, as recited in appended claim 9, the heating up to the reaction temperature is conducted in the temperature range -100°C-600°C, such as in the range 0-500°C.The initial (cold) temperature is for instance 0, 2 or 50°C. Suitably also, as recited farther above, and as recited in appended claim 10, the water gas shift catalyst is heated up to the reaction temperature of the water gas shift reaction by means of steam only.

In an embodiment according to the first aspect of the invention, as recited in appended claim 11, the method is conducted at the steam condensing conditions i.e. heating at temperatures where liquid water is formed, of: about 12 atm abs with a dew point (Tₛₐₜ) of about 190°C, since this is representative of an industrial case and the simplest approach for conducting the start-up by using steam, e.g. superheated steam, readily available in the plant. In another embodiment the steam condensing conditions are 3-5 atm abs with the corresponding dew point, for instance about 4.5 atm abs with dew point (Tₛₐₜ) of about 148°C. The latter embodiment is advantageous, as lower pressures convey less compression energy requirements and enable the use of a lower Tdew.

The number of start-ups of e.g. a HTS reactor required during a year may be significant, for instance up to 5 start-ups per year. Thus, a dedicated nitrogen loop which is normally erected and used for providing a gas having a limited content of steam such as dry nitrogen, for thereby conducting the start-up, is no longer necessary. Again, the invention enables using steam, e.g. superheated steam, which is readily available and integrated in the plant, thereby also simplifying plant operation and reducing capital expenses in the plant.

The invention teaches also how water gas shift catalysts containing an alkali metal or alkali metal compound , such as alkali-promoted Zn/AI type HTS catalyst, with sufficient pore volumes and a sufficient content of alkali metal or alkali metal compounds, can be heated in condensing steam under start-ups, with a leaching of alkali metal compounds that is so small that it will be inconsequential to the expected industrial lifetime of the catalyst.

In other words, the invention makes it possible to heat to the operating temperature (reaction temperature) under condensing conditions even with alkali-containing catalyst without significant loss of catalytic activity or loss of resistance to halogen poisoning due to leaching.

More specifically for a HTS reactor, when comparing the two types of HTS catalysts, the older Fe/Cr-based catalysts and the newer alkali-containing Zn/AI-based catalysts, the latter type has several advantages. Importantly, it is free of chromium, which is an environmental and health hazard. Hence, a more sustainable approach is hereby provided. Furthermore, HTS catalyst is also free of iron, e.g. Fe₂O₃, hence the alkali-containing Zn/AI-based catalysts are much more selective since their tendency to produce hydrocarbons like methane from synthesis gas is much less pronounced than is the case for the Fe/Cr-based catalysts. This difference is most apparent when the HTS reactor is operated at low steam/carbon molar ratio in the feed gas e.g. synthesis gas entering the reactor. Low steam/carbon molar ratio conveys the benefit of less steam being used in the process/plant such as a plant for producing e.g. hydrogen or ammonia, thereby significantly reducing equipment size in the plant as well as saving energy with attendant reduction in carbon dioxide emissions.

It is also well known that iron containing catalysts need to operate above a certain steam/carbon molar ratio in the synthesis gas entering a HTS reactor or above a certain oxygen/carbon molar ratio, in order to prevent formation of iron carbides and/or elemental iron, which may lead to severe loss of mechanical strength and accordingly to increased pressure drop over the reactor. The alkali-containing Zn/AI-based catalysts are not sensitive to the steam/carbon molar ratio and do not lose mechanical strength as a result of a low steam content in the feed gas (synthesis gas) to the HTS reactor during normal operation.

Furthermore, when conducting the start-up with the catalyst having a pore volume of 250 ml/kg or higher, such as 250-800 ml/kg, 400-800 ml/kg or 300-600 ml/kg the number of start-ups possible is significantly increased whilst still maintaining sufficient mechanical strength in the particles thereby avoiding the penalty of increased pressure drop in the water gas shift reactor. For instance, while a HTS catalyst in accordance with US 7998897 during its life time could provide 50 start-ups using steam without substantial leaching, when using a pore volume of e.g. 240 or. 250 ml/kg or higher as recited above, the catalyst of the present invention enables providing over 100 start-ups during its life time with no noteworthy loss of catalytic activity due to leaching.

A second aspect of the invention encompasses the surprising use of a known water gas shift catalyst, such as a high temperature shift catalyst according to applicant's US 7998897 or US 8404156, for the starting-up of a water gas shift reactor having arranged therein said catalyst.

Accordingly, as recited in appended claim 12, the invention encompasses also the use of a water gas shift catalyst which comprises an alkali-metal or alkali metal compound for the starting-up of a water gas shift reactor, the starting-up comprising heating the water gas shift catalyst up to the reaction temperature of the water gas shift reaction under steam condensing conditions by applying steam, e.g. superheated steam, as a heat transfer medium for the water gas shift catalyst; said water gas shift catalyst being free of chromium (Cr) and iron (Fe), and having a pore volume in the range 100-800 ml/kg, such as 400-800 ml/kg or 200-600 ml/kg or 240-380 ml/kg or 250-380 ml/kg or 300-600 ml/kg, as measured by mercury intrusion.

As used herein, the term "said water gas shift catalyst being free of chromium (Cr) and iron (Fe)" means that the content of Fe is less than 0.05 wt% or the content of Cr is less than 0.02 wt%. For example, the content of Fe and Cr is not detectable.

In an embodiment according to the second aspect of the invention, as recited in appended claim 13, the water gas shift catalyst is a high temperature shift catalyst and the water gas shift reactor is a high temperature shift reactor.

In an embodiment according to the second aspect of the invention, as recited in appended claim 14, the high temperature shift (HTS) catalyst comprises Zn, Al, optionally Cu, and an alkali metal or alkali metal compound, wherein the water gas shift catalyst is a Zn/AI-based catalyst comprising in its active form a mixture of zinc aluminum spinel and optionally zinc oxide in combination with an alkali metal compound selected from K, Rb, Cs, Na, Li and mixtures thereof, in which the Zn/AI molar ratio is in the range 0.3-1.5 and the content of alkali metal compound is in the range 0.3-10 wt% based on the weight of oxidized catalyst. Said HTS catalyst is preferably a catalyst according to applicant's US 7998897 or US 8404156, which has a pore volume, as measured by mercury intrusion porosimetry, of 200-250 ml/kg, such as 220-240 ml/kg, for instance about 230 ml/kg, which is sufficient to contain the total volume of liquid (water) that condenses during the start-up.

The pore volume is in the range 100-800 ml/kg, such as 400-800, or 200-600 ml/kg or 240-380 ml/kg. Suitably also, the pore volume isr 300-600 ml/kg or 300-500 ml/kg, for instance 200, 230, 250, 300, 350, 400, 450 or 500 ml/kg, as measured by mercury intrusion.

The mercury intrusion is conducted according to ASTM D4284.

In an embodiment according to the second aspect of the invention, as recited in appended claim 15, the HTS catalyst comprises only Zn, Al, optionally Cu, and an alkali metal or alkali metal compound.

In another embodiment according to the second aspect of the invention, the water gas shift catalyst is a low temperature shift catalyst comprising copper and further comprising an alkali metal or alkali metal compound, said catalyst preferably having a pore volume, as measured by mercury intrusion, of 100-800 ml/kg. The provision of the alkali metal or alkali metal compound enables the catalyst to improve the resistance of the catalyst to poisoning by halogens such as chlorides.

In yet another embodiment according to the second aspect of the invention, as recited in appended claim 16, the content of the alkali metal, preferably K, is in the range 1-6 wt%, such as 1-5 wt% or 2.5-5 wt%.

Thereby, as explained before, the alkali-buffer effect is obtained, which conveys the possibility of increasing catalytic activity even where a minor leaching takes place, fior instance near the reactor wall, suitably by having a content of K in the range 2.5-5 wt%.

Any of the embodiments of the first aspect of the invention and associated benefits may be used with any of the embodiments of the second aspect, and vice versa.

### BRIEF DESCRIPTION OF THE DRAWINGS

Fig. 1 shows the increase of temperature and thereby catalytic activity when feeding gas mixture after a number of start-ups in a HTS reactor, as a function of reactor length, in accordance with Example 1.
Fig. 2 shows the conversion of carbon monoxide with a HTS catalyst according to the invention with respect to different alkali metals (promoters), according to Example 2. For comparison, an unpromoted catalyst essentially containing no alkali metal compounds, is included.
Fig. 3 shows the conversion of carbon monoxide with a HTS catalyst according to the invention with respect to the weight of potassium as the alkali metal (promoter) in the catalyst, according to Example 2.

### DETAILED DESCRIPTION

### Example 1:

A start-up of a HTS reactor under condensing steam carried out at 11.85 atm abs (i.e. about 12 atm abs) with a dew point of Tₛₐₜ = 188°C (i.e. about 190°C) is representative of an industrial case. The amount of condensate depends on the mass of steel, i.e. the reactor vessel, and the mass of catalyst contained in the reactor as well as on the initial temperature which is usually between 0°C and 50°C. Table 1 shows typical volumes of liquid (water) that would form in industrial HTS units of small i.e. internal diameter of about 1 m, and big size i.e. internal diameter of about 5 m. It is apparent that the pore volume of the water gas shift catalyst, which by the invention is in the interval of 100-800 ml/kg, for instance in the interval 200-600 ml/kg, e.g. 240-380 ml/kg, is sufficient to contain the total volume of liquid that condenses during the heating process.

**Table1**

| Internal diameter [m] | Wall thickness [m] | Bed length [m] | Catalyst mass [ton] | Initial temperature [°C] | Water condensed at wall [m3] | Water condensed at catalyst [m3] | Total condensate per catalyst mass [ml/kg] |
|---|---|---|---|---|---|---|---|
| 5.186 | 0.098 | 3.295 | 67.9 | 50 | 1.52 | 3.27 | 70.6* |
| | | | | 2 | 2.04 | 4.40 | 95.0 |
| 1.189 | 0.023 | 2.965 | 3.2 | 50 | 0.08 | 0.17 | 76.8 |
| | | | | 2 | 0.10 | 0.22 | 101.3 |

| | | | | | | | |
|---|---|---|---|---|---|---|---|
| *Calculated as (1.52+3.27)/(67.9)×1000 | | | | | | | |

The catalyst pellets or tablets that are in close proximity to the reactor wall are exposed to water that condenses to heat up the reactor vessel and the catalyst mass. This means that there is a region of the catalyst bed, which is confined to the periphery of the reactor, whose entire pore volume is utilized to contain the liquid that condenses at the reactor wall. The width of this region depends on the pore volume of the catalysts, and it was found that close to the reactor wall, the larger pore volume enables taking up the additional water being condensed at the wall.

A HTS catalyst of the potassium-promoted Zn/AI-type, which is applicable to the method of the invention, is the catalyst according to example 1 of applicant's patents US 7998897 or US 8404156, and where the powder of ZnAl₂O₄ (spinel) and ZnO includes Cu by co-precipitation with a copper salt. The pore volume, as determined by mercury intrusion measurements, tablet density (as measured by simpy dividing the weight of the tablet by its geometrical volume), and potassium content, as measured by the ICP method, as well as copper content, is as follows: pore volume 229 ml/kg, tablet density 1.8 g/cm³, K content: 1.97 wt%, Cu content: 2.71 wt%, based on weight of oxidized catalyst.

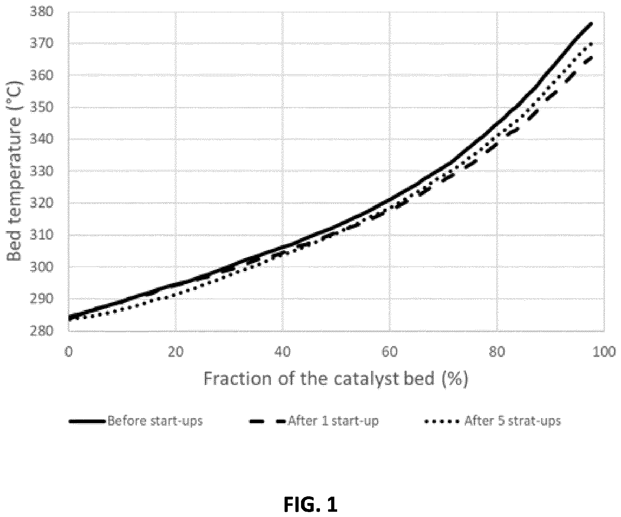

A series of start-ups under condensing steam were carried out in a pilot plant with this catalyst. In the beginning of the tests and after each start-up, the catalyst was exposed to HTS conditions with a gas mixture containing 35 vol% H₂O, 16 vol.% CO, 4 vol.% CO₂, balance H₂, with the reactor operating in (pseudo) adiabatic mode. The increase in the temperature along the reactor length, corresponding to the fraction of the catalyst bed in % of the accompanying figure, is a direct indication of the catalytic activity. Fig. 1 shows that there is only a marginal loss of activity after the first start-up under condensing steam, and the activity remained unaffected in the subsequent tests.

The pilot studies have also shown that start-up procedures in condensing steam with conditions that replicate those of an industrial condensing start-up provided about 50 start-ups without substantial loss of activity.

### Example 2:

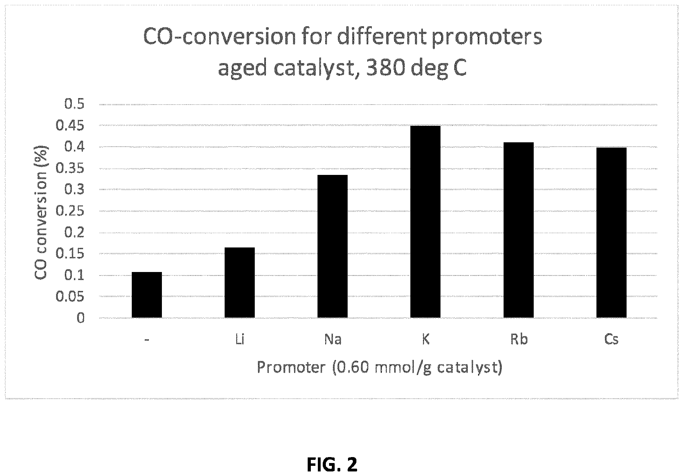

A HTS catalyst of the potassium-promoted Zn/AI-type is the catalyst without copper according to e.g. example 1 of applicant's patents US 7998897. Fig. 2 shows the effect of the alkali metals on catalytic activity in terms of CO-conversion at 380°C, in particular the high promoting effect of K, Rb and Cs. The conversion was measured on an aged catalyst. The aging was done by exposing the catalyst to increasing temperature from 330 to 480°C within a period of 36 hours. For instance, K presents an increase in activity of about 4.5 times with respect to the non-promoted catalyst, while Rb and Cs result in a catalytic activity about 4 times higher with respect to the non-promoted catalyst.

Fig. 3 shows the CO-conversion for potassium as the alkali metal, which surprisingly shows a high promoting effect in particularly the range 1-6 wt% or 1-5 wt%. By operating with a catalyst having more potassium, e.g. about 6 wt%, any leaching of K will actually result in an increase of catalytic activity. If the content of potassium is e.g. 2.5-5 wt%, any leaching of K will still maintain or increase the catalytic activity. The catalyst acts as an "alkali-buffer" and thereby the catalytic activity is not impaired significantly. For instance, leaching of, say 10% (relative) of the potassium, would decrease the K content from, say 4 wt% K, to 3.6 wt% K, which will not decrease the catalyst activity. In fact, if the initial K content is 5 wt% K, the activity would - on a 10% (relative) leaching - increase, since a catalyst with 4.5 wt% K has higher activity than a catalyst with 5 wt% K.

It was also found that this feature compounded with the provision of a higher pore volume, for instance 240 ml/kg or 250 ml/kg or higher, e.g. 240-380 ml/kg, results in a surprisingly robust water gas shift catalyst with significant mechanical strength and no substantial loss of catalytic activity.

## Claims

1. Method of operating a water gas shift reactor in a transient state, in which said transient state is during reactor start-up, the method comprising:
- providing a water gas shift catalyst comprising an alkali metal or alkali metal compound, said water gas shift catalyst being free of chromium (Cr) and iron (Fe);
- heating the water gas shift catalyst up to the reaction temperature of the water gas shift reaction under steam condensing conditions by applying steam as a heat transfer medium for the water gas shift catalyst, and where the water gas shift catalyst has a pore volume, as determined by mercury intrusion, larger than the volume of liquid water that forms during the heating; and
wherein the pore volume of the water gas shift catalyst is in the range 100-800 ml/kg, as measured by mercury intrusion.

2. Method according to claim 1, wherein the pore volume of the water gas shift catalyst is in the range 400-800 ml/kg or 200-600 ml/kg or 240-380 ml/kg or 250-380 ml/kg or 300-600 ml/kg.

3. Method according to any of claims 1-2, wherein the water gas shift reactor is a low temperature shift (LTS) reactor, a medium temperature shift (MTS) reactor, or a high temperature shift (HTS) reactor.

4. Method according to any of claims 1-3, wherein the water gas shift catalyst comprises Zn, Al, optionally Cu, and an alkali metal or alkali metal compound, wherein the water gas shift catalyst is a Zn/AI-based catalyst comprising in its active form a mixture of zinc aluminum spinel and optionally zinc oxide, in combination with an alkali metal compound selected from K, Rb, Cs, Na, Li and mixtures thereof, in which the Zn/AI molar ratio is in the range 0.3-1.5 and the content of alkali metal compound is in the range 0.3-10 wt% based on the weight of oxidized catalyst.

5. Method according to claim 4, comprising only Zn, Al, optionally Cu, and an alkali metal or alkali metal compound.

6. Method according to any of claims 4-5, wherein the Zn/AI molar ratio is in the range 0.5-1.0 and the content of alkali metal is in the range 0.4-8 wt% based on the weight of oxidized catalyst.

7. Method according to any of claims 4-6, wherein the content of the alkali metal, preferably K, is in the range 1-6 wt%, such as 1-5 wt% or 2.5-5 wt%.

8. Method according to any of claims 4-7, wherein the content of Cu is in the range 0.1-10 wt%.

9. Method according to any of claims 1-8, wherein the heating up to the reaction temperature is conducted in the temperature range -100°C to 600°C, such as in the range 0-500°C.

10. Method according to any of claims 1-9, wherein the water gas shift catalyst is heated up to the reaction temperature of the water gas shift reaction by means of steam only, such as by only providing a superheated steam.

11. Method according to any of claims 1-10, wherein the method is conducted at the steam condensing conditions i.e. heating at temperatures where liquid water is formed, of: about 12 atm abs with a dew point (Tₛₐₜ) of about 190°C; or about 4.5 atm abs with dew point (Tₛₐₜ) of about 148°C.

12. Use of a water gas shift catalyst which comprises an alkali metal or alkali metal compound for the starting-up of a water gas shift reactor, the starting-up comprising heating the water gas shift catalyst up to the reaction temperature of the water gas shift reaction under steam condensing conditions by applying steam as a heat transfer medium for the water gas shift catalyst; said water gas shift catalyst being free of chromium (Cr) and iron (Fe), and having a pore volume in the range 100-800 ml/kg, such as 400-800 ml/kg or 200-600 ml/kg or 240-380 ml/kg or 250-380 ml/kg or 300-600 ml/kg, as measured by mercury intrusion.

13. Use according to claim 12, wherein the water gas shift catalyst is a high temperature shift catalyst and the water gas shift reactor is a high temperature shift reactor.

14. Use according to claim 13, wherein the high temperature shift (HTS) catalyst comprises Zn, Al, optionally Cu, and an alkali metal or alkali metal compound, wherein the water gas shift catalyst is a Zn/AI-based catalyst comprising in its active form a mixture of zinc aluminum spinel and optionally zinc oxide in combination with an alkali metal compound selected from K, Rb, Cs, Na, Li and mixtures thereof, in which the Zn/AI molar ratio is in the range 0.3-1.5 and the content of alkali metal compound is in the range 0.3-10 wt% based on the weight of oxidized catalyst.

15. Use according to claim 14, wherein the HTS catalyst comprises only Zn, Al, optionally Cu, and an alkali metal or alkali metal compound.

16. Use according to any of claims 12-15, wherein the content of the alkali metal, preferably K, is in the range 1-6 wt%, such as 1-5 wt% or 2.5-5 wt%.

## Patentansprüche

1. Verfahren zum Betreiben eines Wassergas-Shift-Reaktors in einem Übergangszustand, wobei der Übergangszustand während des Anfahrens des Reaktors eintritt, wobei das Verfahren Folgendes umfasst:
- Bereitstellen eines Wassergas-Shift-Katalysators, der ein Alkalimetall oder eine Alkalimetallverbindung umfasst, wobei der Wassergas-Shift-Katalysator frei von Chrom (Cr) und Eisen (Fe) ist;
- Erhitzen des Wassergas-Shift-Katalysators auf die Reaktionstemperatur der Wassergas-Shift-Reaktion unter Dampfkondensationsbedingungen durch Anwendung von Dampf als Wärmeübertragungsmedium für den Wassergas-Shift-Katalysator, und wobei der Wassergas-Shift-Katalysator ein durch Quecksilberintrusion bestimmtes Porenvolumen aufweist, das größer ist als das Volumen des flüssigen Wassers, das während des Erhitzens entsteht; und
wobei das Porenvolumen des Wassergas-Shift-Katalysators im Bereich von 100-800 ml/kg liegt, gemessen durch Quecksilberintrusion.

2. Verfahren nach Anspruch 1, wobei das Porenvolumen des Wassergas-Shift-Katalysators im Bereich von 400-800 ml/kg oder 200-600 ml/kg oder 240-380 ml/kg oder 250-380 ml/kg oder 300-600 ml/kg liegt.

3. Verfahren nach einem der Ansprüche 1-2, wobei der Wassergas-Shift-Reaktor ein Niedertemperatur-Shift-Reaktor (LTS), ein Mitteltemperatur-Shift-Reaktor (MTS) oder ein Hochtemperatur-Shift-Reaktor (HTS) ist.

4. Verfahren nach einem der Ansprüche 1-3, wobei der Wassergas-Shift-Katalysator Zn, Al, gegebenenfalls Cu, und ein Alkalimetall oder eine Alkalimetallverbindung umfasst, wobei der Wassergas-Shift-Katalysator ein Katalysator auf Zn/AI-Basis ist, der in seiner aktiven Form ein Gemisch aus Zink-Aluminium-Spinell und gegebenenfalls Zinkoxid in Kombination mit einer Alkalimetallverbindung, ausgewählt aus K, Rb, Cs, Na, Li und Gemischen davon, umfasst, wobei das Zn/AI-Molverhältnis im Bereich von 0,3-1,5 liegt und der Gehalt an Alkalimetallverbindung im Bereich von 0,3-10 Gew.-%, bezogen auf das Gewicht des oxidierten Katalysators, liegt.

5. Verfahren nach Anspruch 4, das nur Zn, Al, gegebenenfalls Cu, und ein Alkalimetall oder eine Alkalimetallverbindung umfasst.

6. Verfahren nach einem der Ansprüche 4-5, wobei das Zn/Al-Molverhältnis im Bereich von 0,5 bis 1,0 liegt und der Gehalt an Alkalimetall im Bereich von 0,4 bis 8 Gew.- %, bezogen auf das Gewicht des oxidierten Katalysators, liegt.

7. Verfahren nach einem der Ansprüche 4-6, wobei der Gehalt an Alkalimetall, vorzugsweise K, im Bereich von 1-6 Gew.-%, beispielsweise 1-5 Gew.-% oder 2,5-5 Gew.- %, liegt.

8. Verfahren nach einem der Ansprüche 4-7, wobei der Gehalt an Cu im Bereich von 0,1 bis 10 Gew.-% liegt.

9. Verfahren nach einem der Ansprüche 1-8, wobei das Erhitzen auf die Reaktionstemperatur im Temperaturbereich von -100 °C bis 600 °C, beispielsweise im Bereich von 0-500 °C, durchgeführt wird.

10. Verfahren nach einem der Ansprüche 1-9, wobei der Wassergas-Shift-Katalysator nur mit Hilfe von Dampf auf die Reaktionstemperatur der Wassergas-Shift-Reaktion aufgeheizt wird, beispielsweise nur durch Bereitstellen von überhitztem Dampf.

11. Verfahren nach einem der Ansprüche 1-10, wobei das Verfahren bei Dampfkondensationsbedingungen durchgeführt wird, d. h. Erhitzen auf Temperaturen, bei denen flüssiges Wasser entsteht, von: etwa 12 atm abs mit einem Taupunkt (Tₛₐₜ) von etwa 190 °C; oder etwa 4,5 atm abs mit einem Taupunkt (Tₛₐₜ) von etwa 148 °C.

12. Verwendung eines Wassergas-Shift-Katalysators, der ein Alkalimetall oder eine Alkalimetallverbindung umfasst, zum Anfahren eines Wassergas-Shift-Reaktors, wobei das Anfahren Aufheizen des Wassergas-Shift-Katalysators auf die Reaktionstemperatur der Wassergas-Shift-Reaktion unter Dampfkondensationsbedingungen durch Anwendung von Dampf als Wärmeübertragungsmedium für den Wassergas-Shift-Katalysator umfasst; wobei der Wassergas-Shift-Katalysator frei von Chrom (Cr) und Eisen (Fe) ist und ein Porenvolumen im Bereich von 100-800 ml/kg, beispielsweise 400-800 ml/kg oder 200-600 ml/kg oder 240-380 ml/kg oder 250-380 ml/kg oder 300-600 ml/kg, gemessen durch Quecksilberintrusion, aufweist.

13. Verwendung nach Anspruch 12, wobei der Wassergas-Shift-Katalysator ein Hochtemperatur-Shift-Katalysator ist und der Wassergas-Shift-Reaktor ein Hochtemperatur-Shift-Reaktor ist.

14. Verwendung nach Anspruch 13, wobei der Hochtemperatur-Shift-Katalysator (HTS-Katalysator) Zn, Al, gegebenenfalls Cu, und ein Alkalimetall oder eine Alkalimetallverbindung umfasst, wobei der Wassergas-Shift-Katalysator ein Katalysator auf Zn/AI-Basis ist, der in seiner aktiven Form ein Gemisch aus Zink-Aluminium-Spinell und gegebenenfalls Zinkoxid in Kombination mit einer Alkalimetallverbindung, ausgewählt aus K, Rb, Cs, Na, Li und Gemischen davon, umfasst, wobei das Zn/AI-Molverhältnis im Bereich von 0,3-1,5 liegt und der Gehalt an Alkalimetallverbindung im Bereich von 0,3-10 Gew.- %, bezogen auf das Gewicht des oxidierten Katalysators, liegt.

15. Verwendung nach Anspruch 14, wobei der HTS-Katalysator nur Zn, Al, gegebenenfalls Cu, und ein Alkalimetall oder eine Alkalimetallverbindung umfasst.

16. Verwendung nach einem der Ansprüche 12-15, wobei der Gehalt an Alkalimetall, vorzugsweise K, im Bereich von 1-6 Gew.-%, beispielsweise 1-5 Gew.-% oder 2,5-5 Gew.- %, liegt.

## Revendications

1. Procédé de fonctionnement d'un réacteur de conversion de gaz à l'eau dans un état transitoire, dans lequel ledit état transitoire se produit pendant le démarrage du réacteur, le procédé comprenant :
- la fourniture d'un catalyseur de conversion de gaz à l'eau comprenant un métal alcalin ou un composé de métal alcalin, ledit catalyseur de conversion de gaz à l'eau étant exempt de chrome (Cr) et de fer (Fe) ;
- le chauffage du catalyseur de conversion de gaz à l'eau jusqu'à la température de réaction de la réaction de conversion de gaz à l'eau dans des conditions de condensation de vapeur en appliquant de la vapeur comme milieu de transfert de chaleur pour le catalyseur de conversion de gaz à l'eau, et où le catalyseur de conversion de gaz à l'eau présente un volume de pores, tel que déterminé par intrusion de mercure, plus grand que le volume d'eau liquide qui se forme pendant le chauffage ; et
dans lequel le volume de pores du catalyseur de conversion de gaz à l'eau se trouve dans la plage de 100 à 800 ml/kg, tel que mesuré par l'intrusion de mercure.

2. Procédé selon la revendication 1, dans lequel le volume de pores du catalyseur de conversion de gaz à l'eau se trouve dans la plage de 400 à 800 ml/kg ou de 200 à 600 ml/kg ou de 240 à 380 ml/kg ou de 250 à 380 ml/kg ou de 300 à 600 ml/kg.

3. Procédé selon l'une quelconque des revendications 1-2, dans lequel le réacteur de conversion de gaz à l'eau est un réacteur de conversion à basse température (LTS), un réacteur de conversion à température moyenne (MTS) ou un réacteur de conversion à haute température (HTS).

4. Procédé selon l'une quelconque des revendications 1-3, dans lequel le catalyseur de conversion de gaz à l'eau comprend du Zn, de l'Al, facultativement du Cu, et un métal alcalin ou un composé de métal alcalin, dans lequel le catalyseur de conversion de gaz à l'eau est un catalyseur à base de Zn/AI comprenant sous sa forme active un mélange de spinelle de zinc et d'aluminium et facultativement d'oxyde de zinc, en combinaison avec un composé de métal alcalin sélectionné parmi K, Rb, Cs, Na, Li et des mélanges de ceux-ci, dans lequel le rapport molaire Zn/AI se trouve dans la plage de 0,3 à 1,5 et la teneur en composé de métal alcalin se trouve dans la plage de 0,3 à 10 % en poids sur la base du poids du catalyseur oxydé.

5. Procédé selon la revendication 4, comprenant uniquement du Zn, de l'Al, facultativement du Cu, et un métal alcalin ou un composé de métal alcalin.

6. Procédé selon l'une quelconque des revendications 4-5, dans lequel le rapport molaire Zn/AI se trouve dans la plage de 0,5 à 1,0 et la teneur en métal alcalin se trouve dans la plage de 0,4 à 8 % en poids sur la base du poids du catalyseur oxydé.

7. Procédé selon l'une quelconque des revendications 4-6, dans lequel la teneur en métal alcalin, de préférence K, se trouve dans la plage de 1 à 6 % en poids, comme 1 à 5 % en poids ou 2,5 à 5 % en poids.

8. Procédé selon l'une quelconque des revendications 4-7, dans lequel la teneur en Cu se trouve dans la plage de 0,1 à 10 % en poids.

9. Procédé selon l'une quelconque des revendications 1-8, dans lequel le chauffage jusqu'à la température de réaction est effectué dans la plage de température de -100 °C à 600 °C, par exemple dans la plage de 0 à 500 °C.

10. Procédé selon l'une quelconque des revendications 1-9, dans lequel le catalyseur de conversion de gaz à l'eau est chauffé jusqu'à la température de réaction de la réaction de conversion de gaz à l'eau au moyen de vapeur uniquement, par exemple en fournissant uniquement une vapeur surchauffée.

11. Procédé selon l'une quelconque des revendications 1-10, dans lequel le procédé est réalisé dans des conditions de condensation de vapeur, c'est-à-dire de chauffage à des températures où de l'eau liquide se forme, de : environ 12 atm abs avec un point de rosée (Tₛₐₜ) d'environ 190 °C ; ou d'environ 4,5 atm abs avec un point de rosée (Tₛₐₜ) d'environ 148 °C.

12. Utilisation d'un catalyseur de conversion de gaz à l'eau qui comprend un métal alcalin ou un composé de métal alcalin pour le démarrage d'un réacteur de conversion de gaz à l'eau, le démarrage comprenant le chauffage du catalyseur de conversion de gaz à l'eau jusqu'à la température de réaction de la réaction de conversion de gaz à l'eau dans des conditions de condensation de vapeur en appliquant de la vapeur comme milieu de transfert de chaleur pour le catalyseur de conversion de gaz à l'eau ; ledit catalyseur de conversion de gaz à l'eau étant exempt de chrome (Cr) et de fer (Fe), et présentant un volume de pores dans la plage de 100 à 800 ml/kg, comme de 400 à 800 ml/kg ou de 200 à 600 ml/kg ou de 240 à 380 ml/kg ou de 250 à 380 ml/kg ou de 300 à 600 ml/kg, tel que mesuré par l'intrusion de mercure.

13. Utilisation selon la revendication 12, dans laquelle le catalyseur de conversion de gaz à l'eau est un catalyseur de conversion à haute température et le réacteur de conversion de gaz à l'eau est un réacteur de conversion à haute température.

14. Utilisation selon la revendication 13, dans laquelle le catalyseur de conversion à haute température (HTS) comprend du Zn, de l'Al, facultativement du Cu, et un métal alcalin ou un composé de métal alcalin, dans laquelle le catalyseur de conversion de gaz à l'eau est un catalyseur à base de Zn/AI comprenant sous sa forme active un mélange de spinelle de zinc et d'aluminium et facultativement d'oxyde de zinc, en combinaison avec un composé de métal alcalin sélectionné parmi K, Rb, Cs, Na, Li et des mélanges de ceux-ci, dans laquelle le rapport molaire Zn/AI se trouve dans la plage de 0,3 à 1,5 et la teneur en composé de métal alcalin se trouve dans la plage de 0,3 à 10 % en poids sur la base du poids du catalyseur oxydé.

15. Utilisation selon la revendication 14, dans laquelle le catalyseur HTS comprend uniquement du Zn, de l'Al, facultativement du Cu, et un métal alcalin ou un composé de métal alcalin.

16. Utilisation selon l'une quelconque des revendications 12-15, dans laquelle la teneur en métal alcalin, de préférence K, se trouve dans la plage de 1 à 6 % en poids, comme 1 à 5 % en poids ou 2,5 à 5 % en poids.
